# EUROPEAN PATENT APPLICATION

(11) **EP 1 713 006 A1**
(43) Date of publication of application: **18.10.2006**
(21) Application number: 06251906.1
(22) Date of filing: 05.04.2006
(51) Int. Cl.: G06F 13/40

(54) **Methods and apparatus for managing signals during power-up and power down**

(30) Priority: 13.04.2005 US 670853 P; 15.08.2005 US 205273
(71) Applicant: Tellabs Operations, Inc., Naperville, IL 60563 (US)
(72) Inventor: Bieker, John J., Plainfield, Illinois 60544 (US); Crawfis, Steven J., Naperville 60565 (US)
(74) Representative: Greenwood, John David

(57) **Abstract**

A method or system (100) for managing signals to a circuit during initialization of the circuit ensures that the circuit (105) does not receive signals before the circuit (105) is initialized for such reception. The method or system (100) maintains signals to the circuit (105) in an initial condition while the circuit is uninitialized, and releases the initial condition following initialization of the circuit. The method or system is useful in "hot-swapping" circuit boards, for example, in communications systems or other applications because it enables not-hot-swappable (NHS) circuitry (105) to be connected to the system without receiving signals from the system that adversely affect the NHS circuitry (105).

## Description

### RELATED APPLICATIONS

This application is a continuation of U.S. Application 11/205,273, filed on August 15, 2005 which claims the benefit of U.S. Provisional Application No. 60/670,853, filed on April 13, 2005. The entire teachings of the above applications are incorporated herein by reference.

### BACKGROUND OF THE INVENTION

Circuit boards are often designed to be "hot swappable" to allow them to be disconnected and inserted into a system without worry of damaging circuit components on the circuit boards. There are many ways of designing circuit boards to be hot swappable. One such way is to buffer all signal lines (i.e., traces) that connect sensitive circuitry (e.g., CMOS) to connectors, thereby protecting the circuitry from adverse signals. Another way is to buffer the lines and provide on-board power ramping control. Regardless of the techniques, it is the circuit boards themselves that are designed to make the hot swapping easy for a user.

The present invention is as claimed in the claims.

### SUMMARY OF THE INVENTION

An embodiment of the present invention is a system or method of managing signals. Signals to a circuit are maintained in an initial condition while the circuit is in an uninitialized state. After the circuit is initialized, the initial condition of the signal is released.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.
FIG. 1 is an illustration of a communications system in which an embodiment of the present invention may be applied;
FIG. 2 is a diagram of an embodiment of modules used in the communications system of Fig. 1;
FIG. 3 is a schematic diagram of signal controller as implemented in the embodiment of FIG. 2;
FIG. 4 is a flow diagram of an exemplary embodiment of the present invention.
FIGS. 5A-5C are timing diagrams depicting resulting signals of three embodiments of the present invention; and
FIG. 6 is an illustration of an exemplary application in which the present invention may be used.

### DETAILED DESCRIPTION OF THE INVENTION

A description of preferred embodiments of the invention follows.

An embodiment of the present invention may be employed in communications systems or other systems, such as modular computers, aircraft with modular electronics, networking equipment, railway traffic control systems, and so forth. For purposes of presenting embodiments of the present invention, communications systems are described; however, it should be understood that the principles presented herein apply to any application in which "hot swapping" is useful.

Communications systems are typically modular in design, made of various communications modules that include hardware and software that transmit inter-module communication signals, such as data or clock signals, in order to support communications traffic, such as voice, data, or packets. Modular systems are often designed for hot-swapping circuit boards.

An embodiment of the present invention provides an elegant and cost-effective solution for maintaining communications to and from a Non-Hot Swappable (NHS) module. The NHS module can be safely removed and, upon reinsertion of the NHS module or switch of the NHS module with a replacement NHS module in a hot-swappable manner, communications traffic through an NHS module can be resumed.

Embodiments of the present invention provide a method or system of managing communication signals to a circuit to allow the circuit to effectively operate as a "hot swappable" circuit. Embodiments of the invention operate by controlling communications signals to a circuit so that the circuit does not receive signals before it is fully initialized. In this way, the circuit component may be powered up and down while the backplane remains powered without damaging the circuit.

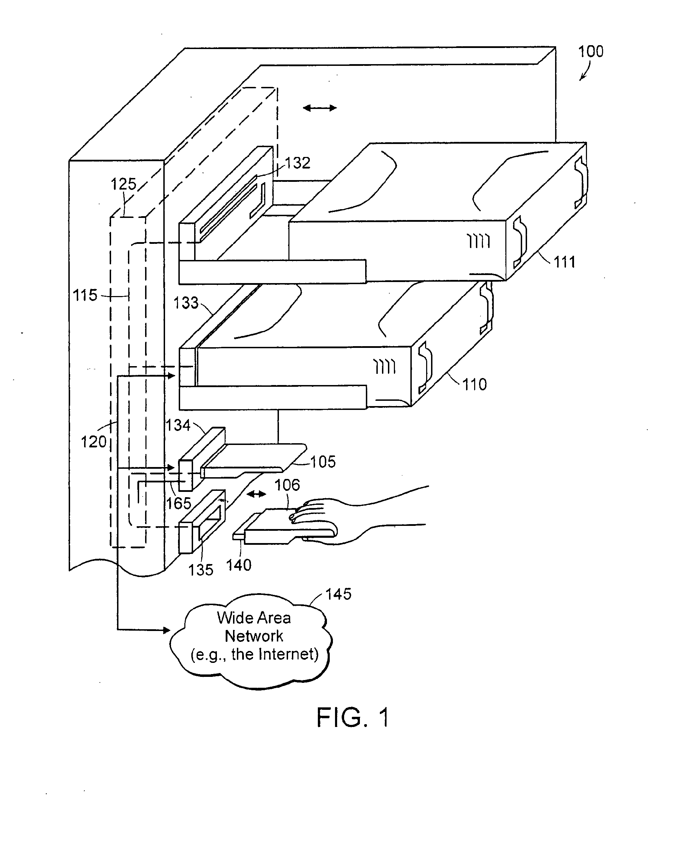

FIG. 1 illustrates a part of such an exemplary communication system 100. The system 100 includes active communications modules 105, 106, 110, 111, and channels for inter-module communications signals 115 (dashed lines) and communications traffic (120). Communications traffic 120 (solid line) may reach an external system, such as a wide area network 145. Each communications module 105, 106, 110, 111 can include a printed circuit board (PCB) on which electrical, optical, or other components are mounted and interconnected by circuit board traces or other communication paths so they can communicate with each other. Units such as a first module 110 may comprise multiple circuit boards and other components within in a single housing.

In the example communications system 100, the communications modules 105, 106, 110, 111 are inserted in sockets in a common chassis or shelf. At the back of the chassis or shelf is typically another PCB, referred to as a backplane 125, which contains sockets 132-135 for receiving the communications modules 105, 106, 110, 111. An edge connector 140 is illustrated at an edge of one of the communications modules 106, which can mate with one of the backplane sockets 132-135. Typically, sockets (not shown) and pins or other interconnect mechanisms are located within a backplane socket connector 135 and a module edge connector 140 so that the sockets/pins are connected to traces (not shown) on a circuit board upon mating of the module edge connector 140 with a backplane socket 135. The traces permit transmission of communication signals, data signals, clock signals, or other signals between a communications module and the backplane. Some or all of the modules in the system 100 may be modular, meaning that they can be removed and replaced easily.

Modules 106 and 111 illustrate such functionality; both modules 106, 111 may be disconnected and reconnected to the system quickly by manually inserting them into their respective sockets 135, 132. Because other communications modules can be similarly connected to the backplane 125, the backplane 125 provides a mechanism that supports communications between one communications module and another communications module.

A particular communications module can be "hot-swappable" in various ways. One way that a communications module can be "hot-swappable" is that the module can be replaced without a power shut-off. For example, upon a failure of a communications module, that module can be "hot-swapped," or switched with a replacement communications module of the same type, without shutting off the power source to the failed module or replacement module while it is being inserted. Following the "hot-swap," the hot-swapped communications module may communicate with the system 100. Because the system 100 remains powered, a "hot-swap" may allow module failures to be corrected without substantial interruption to communication traffic 120 through the remainder of the communications system 100.

Another way that a communications module can be "hot-swappable" is that the module can be reinserted without a power shut-off. For example, upon diagnosing a problem related to a communications module, that module can be extracted and reinserted (to reconnect to the backplane) without shutting-off the power source to the communications module. Upon the reinsertion and power-up of the communications module, communications originally to or from the communications module are reintroduced and likely as a result, communications traffic 120 (e.g., voice, data, packets) in the communication system 100 is maintained.

Sometimes, however, a particular communications module is not or cannot be designed to be hot-swappable. In this case, before reinsertion of the same communications module, or switching a failed communications module with a replacement communications module, the power to the failed or replacement communications modules, or more likely the entire system, must be shut off. After reinsertion of the same module or insertion of a different module, the power is returned to the module. In this case, communications traffic 120 in the communication system 100 may not be maintained.

Sometimes, a communications system can be redesigned so that a non-hot-swappable communications module ("NHS module") can effectively act as a hot-swappable module. For example, a buffer can be added to the NHS module. The buffer can contain hardware or software functionality to maintain communications originally to or from the NHS module after being reinserted or switched with a replacement NHS module. However, this redesign can be costly since it requires modification or replacement of the NHS module.

Continuing to refer to FIG. 1, according to an exemplary embodiment of the present invention, a communicating module 110 is coupled to a non-hot-swappable module ("NHS module"), and the modules communicate with one another. Such an embodiment is illustrated in FIG. 1, where the communicating module 110 and NHS module 105 communicate through a backplane 125. Upon failure of the NHS module 105, a user likely removes and reinserts the NHS module 105 or switches it with a replacement module, as illustrated by another NHS module 106. During this process, communications from the communicating module 110 to the NHS module 105 is withheld. Upon initialization of the reinserted or replacement NHS module, communication from the communicating module 110 may be resumed. This process may be referred to as a "hot swap" because power is maintained to the system.

The communicating module 110 withholds communications to the NHS module 105 based on a detection signal 165 that indicates failure, absence, removal, or reinsertion of the NHS module 106. Using the detection signal 165, the communicating module 110 withholds communications at least from when the NHS module 105 is reinserted to when the NHS module 105 is in an initialized state. Because signals to an NHS circuit may destroy the NHS circuit before it is initialized, such withholding is necessary to protect the NHS module 105. The NHS module 105 may further require withholding signals during removal or module failure. The communicating module 110 may withhold communications to the NHS module 105 when such communications may be destructive to the NHS module 105.

In a more specific embodiment of the present invention, the communicating module 110 detects failure of the NHS module 105 by detecting an absence of a particular signal 165 normally transmitted from the NHS module 105 to the communicating module 110. Upon detecting an absence of the NHS signal 165, the communicating module 110 withholds normal signal transmissions to the NHS module 105. This withholding may be accomplished by tying the signals to ground or by sending signals known to be nondestructive to the uninitialized NHS circuit. Normal signal transmissions can be transmission of no signals, one signal, or multiple signals. In an absence of the NHS signal, it is likely that the NHS module 105 has been reinserted and is powering-up, or that the NHS module 105 has been replaced with a replacement NHS module 106 and the replacement NHS Module 106 is powering-up. Accordingly, the communicating module 110 waits for the reinserted NHS module 105 or replaced NHS module 106 to power-up and initialize. Upon detecting a presence of an NHS signal from the reinserted or replaced NHS module 105, 106, respectively, the communicating module 110 resumes normal signal transmissions to the NHS module. By waiting until initialization is complete, circuitry within the NHS module 105, such as CMOS circuitry, is prepared to receive normal signal transmission. Alternatively, the communicating module 110 may wait a predetermined amount of time after detecting the presence or absence of the NHS signal 165 before resuming normal signal transmission to the NHS module 105. This alternative may be employed when the NHS module 105 transmits the NHS signal 165 before the module is fully initialized. The communication signals resumed by the communicating module 105, 106 are received by the reinserted or replaced NHS module 105, 106 and can be, for example, clock and data signals. It should be understood that a subset of signals may be handled in a manner designated for NHS treatment because some circuitry on an NHS module may be buffered and some circuitry may not be sensitive to the presentation of signals (e.g., +5V) during insertion into a backplane, for example.

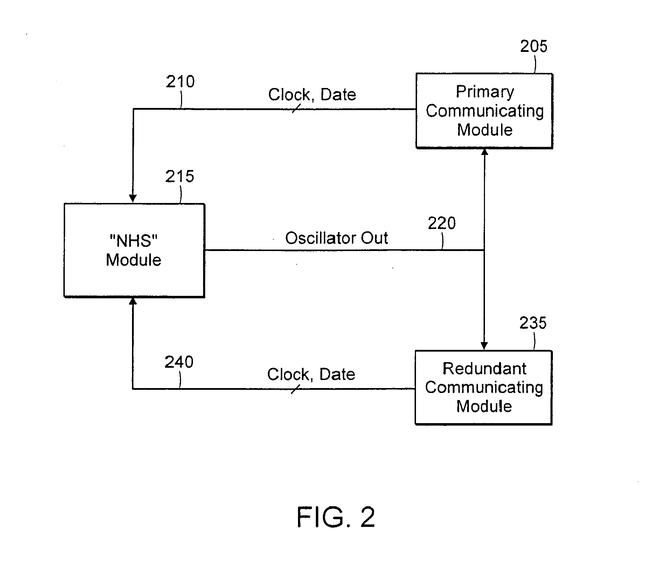

FIG. 2 illustrates transmission of signals between embodiments of an NHS module 215 and modules that communicate with it, herein referred to as communicating modules 205, 235, according to an exemplary embodiment of the present invention. In the system of Fig. 2, one of the communicating modules 205 is referred to as a primary communicating module 205, and the other communicating module 235 is referred to as a redundant communicating module 235. The NHS module 215 normally receives signals 210, 240 from the primary communicating module 205 and the redundant communicating module 235. The communication signals 210, 240 may be data or clock signals. The NHS module 215 normally transmits an NHS signal (e.g., a clock signal) 220 to both communicating modules 205, 235. Upon or following detection by the communicating modules 205, 240 of the absence of the NHS signal 220 from the NHS module 215, the communicating modules 205, 240 withhold normal signal transmission to the NHS module 215, at least to signal lines of the NHS module 215 that are known not to be compatible with hot-swapping signal levels. Upon or following detection by the communicating modules 205, 240 of the presence of the NHS signal 220 or after a predetermined amount of time known to exceed an initialization of the NHS module 215, the communicating modules 205, 240 resume normal signal transmissions to NHS module 215.

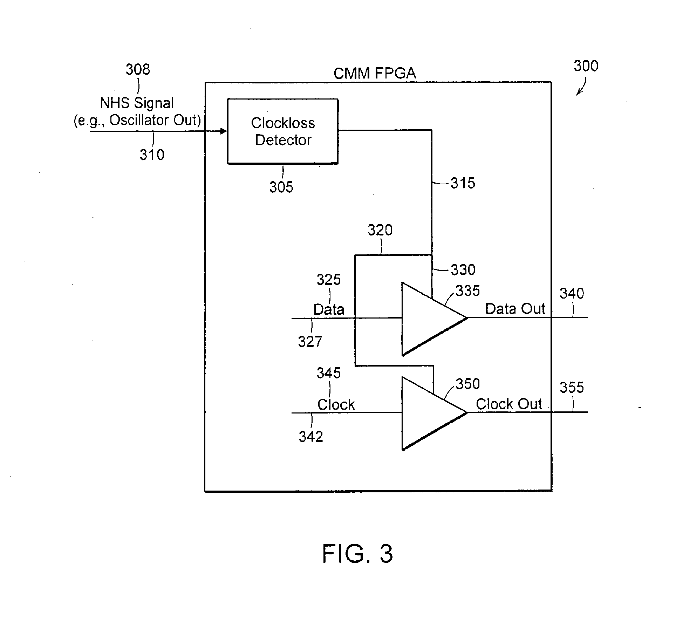

FIG. 3 illustrates an aspect of an exemplary embodiment of the present invention, as implemented in a field-programmable gate array (FPGA), which may be included within a communications module or function as a discrete control circuit between a communications module and an NHS module. A controller 300 receives an NHS signal 308, which may be the same different from the NHS signal 220 of FIG. 2, from an NHS module, such as the NHS module 215 of FIG. 2, at a communications path 310. The NHS signal 308 indicates, either directly or indirectly, whether the NHS module 215 is initialized. The NHS signal 308 may do so in one of several ways, such as (i) indicating a differential when the NHS module 215 is connected or disconnected, (ii) indicating the NHS module 215 is powered or unpowered, or (iii) indicating the NHS module 215 is initialized or uninitialized. In the embodiment of Fig. 3, the NHS signal 308 at communications path 310 is output by an NHS module oscillator (not shown) that transmits a clock signal when the NHS module is initialized. The controller 300 also receives the data and clock signals 325, 345, through channels 327, 342, respectively, from the communications module that communicates with the NHS module 215. The controller 300 controls the data and clock signals 325, 345 according to the NHS signal 308 at path 310 so that the output data and clock signals 340, 355 transmit to the NHS module 215 after the NHS module 215 is initialized.

A signal detector 305 detects the presence or absence of the NHS signal 308 input through the communications path 310. The signal detector 305 communicates this presence or absence to gates 335, 350, through communications paths 315, 320, 330. If presence of the NHS signal 308 is detected, a gate 335 outputs, through communications path 340, data it receives from a communications path 327. Similarly, if presence of the NHS signal 308 is detected, a gate 350 outputs, through a communications path 355, the data it receives from a communications path 345. If absence of the NHS signal 308 is detected, the gate 335 withholds any input signal it receives from communication path 327 until presence of the NHS signal 308 is detected or after a predetermined amount of time known for an initialization of the NHS module to be complete. Similarly, if absence of the NHS signal 308 is detected, the gate 350 withholds any input signal it receives from the communication path 342 until presence of the NHS signal 308 is detected or after a predetermined amount of time. Thus, the controller 300 functions as a gate on the signals 325, 345 from the communications module to the NHS module 215, ensuring that the signals 325, 345 pass to the NHS module 215 as outputs 340, 355 during an initialized state of the NHS module.

Alternatively, the exemplary embodiment of FIG. 3 can be modified so that the control circuit 300 detects initialization of the NHS module 215 by observing the presence of the NHS module in a manner other than by detecting an NHS module signal, such as the NHS oscillation signal 310. For example, the control circuit 300 may receive a detection signal that is different from the oscillating signal 310. In such an embodiment, the clockloss detector 305 is a different detector circuit, or a series of circuits, that control(s) signal gates 335, 350 according to the power status of the NHS module 215. Other examples include means for observing a steady-state output from the NHS module, or means that do not observe an active signal from the NHS module, such as detecting an impedance across or current through the power terminals connecting to the NHS module. In yet other embodiments, a simple mechanical switch (not shown) may be used to indicate whether the NHS module is in operative engagement with a backplane, for example, such that it is receiving power and, presumably, initialized.

The exemplary embodiment of FIG. 3 may be modified to control the power source to the NHS module in addition to the communication signals 340, 355. In this other embodiment, the controller 300 also receives power signals to the NHS module 215 and a connection signal indicating whether the NHS module 215 is connected to the communicating module. The connection signal may be considered analogous to the oscillator signal 220 at path 310, and the power signals may be considered analogous to the data and clock inputs 325, 345. The power output to the NHS module may be considered analogous to the data and clock outputs 340, 355. The controller may withhold power to the NHS module while it is unconnected. Upon or following detection of the connection of the NHS module, the controller transmits the power output to the NHS module. The level of this power output may be the same as that of the power input received by the controller 100. In other embodiments, the controller 300 may include a digitally-controlled amplifier that gradually ramps the power output or transmits a different power level according to the power requirements of the NHS module.

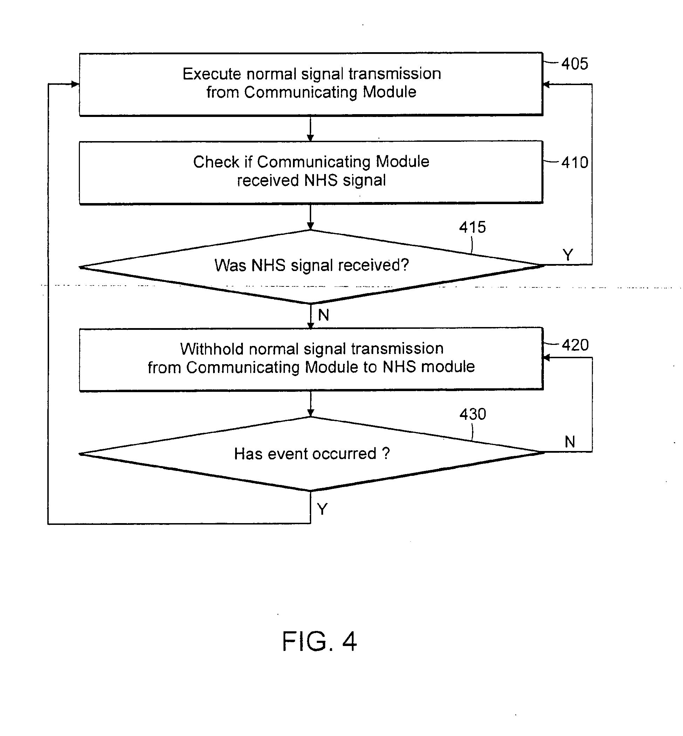

FIG. 4 is a flow diagram of an exemplary embodiment of the present invention. At step 405, normal signal transmissions from the communications module to the NHS module is executed. At step 410, the communicating module checks if it received an NHS signal from the NHS module. At step 415, if the NHS signal is received, the next step is step 405, where normal signal transmission from the communicating module to the NHS module is executed. Otherwise, the next step is step 420, where normal signal transmissions from the communicating module to the NHS module are withheld. At step 430, the communicating module checks if an event has occurred. This event can be, for example, a presence of the signal NHS signal transmitted from the NHS module to the communicating module or a passing of a predetermined amount of time. If the event does not occur, the next step is step 420, where normal signal transmissions from the communicating module to the NHS module are withheld. Otherwise, the next step is step 405, where normal signal transmissions from the communications module to the reinserted or replacement NHS module are resumed.

Some of the steps illustrated in Fig. 4 may be performed in an order other than that which is described. Furthermore, it should be appreciated that not all of the steps illustrated in the flow diagrams are required to be performed, that additional steps may be added, and that some of the steps may be substituted with other steps.

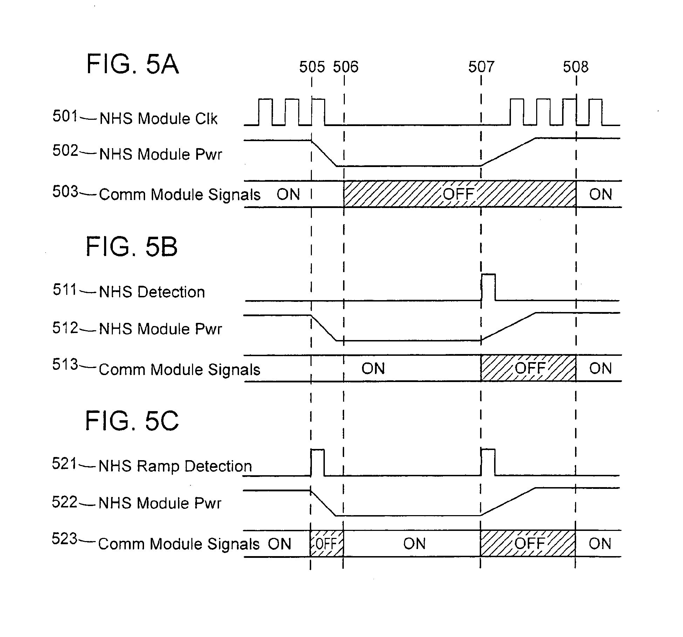

FIGS. 5A-5C are a series of timing diagrams corresponding to different exemplary embodiments of the present invention. All diagrams show an NHS detection signal 501, 511, 521, NHS module power 502, 512, 521, and communicating module signals 503, 513, 523 to the NHS module. The signals are shown over a period where the NHS module is powered down 505 and then powered up and initialized 508.

FIG. 5A is a timing diagram that may correspond to the exemplary embodiment of Fig. 2. In this embodiment, the NHS detection signal is the NHS module clock 501, which oscillates when the NHS module is powered. The communicating module detects the NHS module clock 501 and transmits the communicating module signals 501 to the NHS module while the module clock 501 is oscillating. At time 505, power to the NHS module is removed, either by removing the module or disconnecting power to the module. The NHS module clock 501 continues one more clock cycle before the NHS module is fully unpowered. At time 506, the communications module detects that the NHS module clock 501 failed to oscillate and, as a result, maintains the communications module signals 503 to the NHS module in an initial condition, referred to in one embodiment as "OFF." At time 507, the NHS module or a replacement NHS module is connected to the system and begins to power up. After a short "start-up" time, the NHS module clock 501 begins to oscillate. Upon detecting this oscillation, the communicating module waits for a predetermined amount of time for the NHS module to be initialized. At time 508, the NHS module is initialized and the communicating module resumes transmitting of the communicating module signals 503 to the NHS module by releasing the initial condition OFF and entering an operating condition ON.

FIG. 5B is a timing diagram of an exemplary embodiment of the present invention, in which signals to the NHS module are withheld while the module is powering up. The NHS detection signal 511 produces a pulse when the NHS module is initially connected to the system. The communicating module detects the pulse of the NHS detection signal 511 and, in response, withholds communicating module signals 513 to the NHS module for a predetermined time by maintaining the module signals 513 in an initial condition, "OFF." At time 505, power to the NHS module is removed, either by removing the module or disconnecting power to the module. During this time, communicating module signals 513 continue to be transmitted, and such signals may be received by other modules that remain connected and powered. At time 507, the NHS module or a replacement NHS module is connected to the system and begins to power up. At this time, the NHS detection signal 511 sends a pulse to indicate that NHS module has been connected. Upon detecting this pulse, the communicating module withholds signals to the NHS module by maintaining the communicating module signals 513 in an initial condition, "OFF." The communicating module then waits for a predetermined amount of time for the NHS module to be initialized. At time 508 the NHS module is initialized and communicating module signals 513 to the NHS module are resumed by releasing the initial condition.

FIG. 5C is a timing diagram of an exemplary embodiment of the present invention, in which signals to the NHS module are withheld while the module is powering down and powering up. The NHS detection signal 521 produces a pulse when the NHS module is disconnected from, and initially connected to, the system. The communicating module detects the pulse of the NHS detection signal 521 and, at these instants, withholds communicating module signals 523 to the NHS module for a predetermined length of time by maintaining the module signals 523 in an initial condition, "OFF."

At time 505, power to the NHS module is removed, either by removing the module or disconnecting power to the module. The NHS detection signal indicates this event with a pulse and, in response the communicating module, withholds signals 523 to the NHS module for a predetermined amount of time by maintaining the communicating module signals 533 in an initial condition, "OFF." At time 506, communicating module signals 523 resume transmission, and such signals may be received by other modules that remain connected and powered. At time 507, the NHS module or a replacement NHS module is connected to the system and begins to power up. At this time, the NHS detection signal 521 sends a pulse to indicate that NHS module has been connected. Upon detecting this pulse, the communicating module withholds signals to the NHS module by maintaining the communicating module signals 523 in an initial condition, "OFF." The communicating module then waits for a predetermined amount of time for the NHS module to be initialized. At time 508, the NHS module is initialized and communicating module signals 523 to the NHS module are resumed by releasing the initial condition.

The initial condition of the signals is described as "OFF." It should be understood that signal levels falling within an initial condition level may be zero volts, ground via switch, a few tenths of a volt, a few volts (depending on the circuitry being protected), a high impedance floating output from a tri-state device, or any other signal levels that provide a protecting measure to a circuit having sensitive circuit elements that are not hot-swap protected.

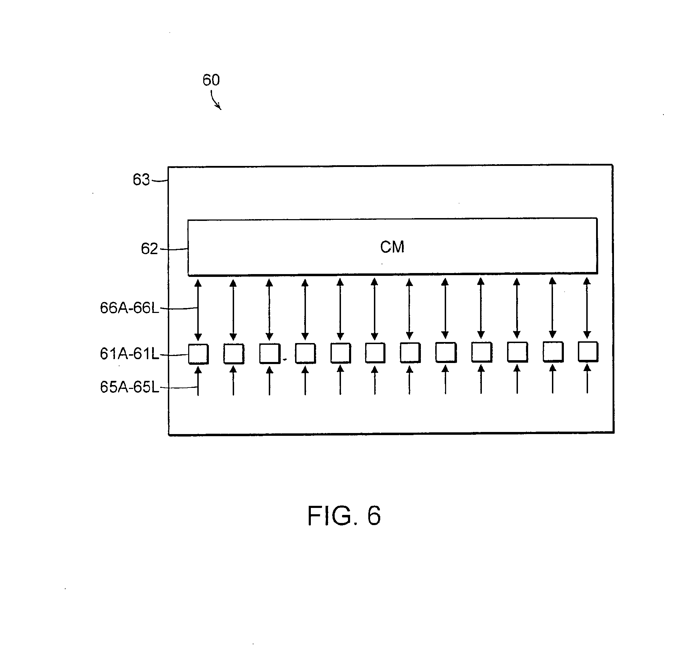

FIG. 6 is an illustration of an exemplary application of the present invention, in which hot-swappable circuitry communicates with non-hot-swappable or partially hot-swappable circuitry. Because legacy or otherwise outmoded hardware is often non-hot-swappable, this exemplary embodiment solves a common problem of communicating with legacy circuitry. A communicating module 62 and multiple interface modules 61A-61L are modular circuits that connect to, and communicate through, a backplane circuit 63. The twelve interface modules 61A-61L receive incoming traffic signals 65A-65L from the backplane circuit 63 and processes these signals. Through the inter-module signal channels 66A-66L, the interface modules 61A-61L transmit the processed signals to the communicating module 62, and the communicating module 62 transmits requests for these signals to the interface modules 61A-61L. The interface modules 61A-61L are "legacy modules" that are partially hot-swappable, meaning that the uninitialized circuitry of these modules are protected from incoming traffic signals 65A-65L, but are adversely sensitive to inter-module signals from the channels 66A-66L.

The system 60 of FIG. 6 may be used to perform critical communications, tasks that are expected by those employing the system 60 to occur without failure. Thus, the system 60 is intended to operate substantially continuously with minimal downtime. To ensure substantially continuous operation, signals flow through the channels 65A-65L and 66A-66L, and any module that fails is preferably replaced while the system is operational. Thus, when a single interface module 61A fails, it is removed from the backplane circuit 63 and either reinserted or replaced with a replacement module while the channels 65A, 66A are still active. However, the interface module 61 A is uninitialized during replacement and powering up and thus is adversely sensitive to active channel 66A. Because signals from the inter-module channel 66A may damage the interface module 61 A, interface modules 61A-61L cannot effectively be replaced while the system 60 is operational without assistance from the communicating module 62 or backplane 63, if active. In other embodiments, another circuit board (e.g., interface module 61B) may play a role in the "off-board" hot-swapping protection of an interface module being protected.

In order to solve this problem of communication with legacy hardware (or any other NHS hardware), the hardware (interface modules 61A-61L) can be replaced with fully hot-swappable hardware. However, the costs of this replacement may be prohibitively high. The communication system 60 may be a popular commercial product with a large and widely distributed user base. Other factors may also play a role. For example, the number of interface modules 61A-61L may greater than the number of communicating modules 62 by a factor of twelve. Thus, to replace the legacy hardware with updated hardware may require excessive hardware recall, expensive hardware production, and extensive servicing.

An embodiment of the present invention provides a far more cost-effective solution. Because the communicating module 62 is the source of the signals that may damage uninitialized interface modules 61A-61L, the communicating module 62 may be modified to withhold signals through inter-module channels 66A-66L when the interface modules 61A-61L are uninitialized. In one embodiment, this modification may be made by reprogramming the field-programmable gate array (FPGA) within the communicating module 62. The modified FPGA may provide a gate that receives indication of the connection or initialization state of each interface module 61A-61L and may control the signals through the channels 66A-66L. The modified FPGA withholds signals through the channels 66A-66L at certain times according to this indication to ensure that the interface modules 61A-61L receive signals after the modules are initialized.

This solution effectively allows the partially hot-swappable legacy modules 61A-61L to function as hot-swappable modules because signals to the uninitialized module that may be harmful are withheld. In contrast to recalling and replacing the legacy modules, the above solution involves recalling far fewer modules (i.e., communicating modules 62) and merely reprogramming present hardware rather than replacing hardware. In this way, making the system 60 hot-swappable requires less cost and little to no hardware production, and offers less extensive servicing of the system 60 due to failures induced in the interface modules 61A-61L by accidental or intentional hot-swapping.

While this invention has been particularly shown and described with references to preferred embodiments thereof, it will be understood by those skilled in the art that various changes in form and details may be made therein without departing from the scope of the invention encompassed by the appended claims.

Embodiments of the present invention are not limited to applications in "hot-swapping," and may solve a broad range of problems relating to managing communication channels during initialization of component circuitry.

## Claims

1. A method of managing signals, the method comprising:
maintaining at least one signal to a circuit in an initial condition during an uninitialized state of the circuit; and
releasing the initial condition of the at least one signal following initialization of the circuit.

2. The method of Claim 1 further comprising:
maintaining power signals to the circuit in an initial condition while the circuit is unconnected; and
transitioning the power signals to the circuit from the initial condition to a power level following detection of connection of the circuit.

3. The method of Claim 1 wherein the uninitialized state of the circuit is during a transition of the circuit from unpowered to powered.

4. The method of Claim 1 further comprising causing the at least one signal to enter the initial condition in an event the circuit is powered-down or disconnected.

5. The method of Claim 4 further comprising:
releasing the initial condition of the at least one signal following detection of disconnection of the circuit; and
causing the at least one signal to re-enter the initial condition in an event the circuit is reconnected.

6. The method of Claim 1 further comprising monitoring a status signal indicating the circuit has reached an initialized state.

7. The method of Claim 1 and any of :
a) further comprising detecting a presence of the circuit in a manner other than be deciding an initialization state of the circuit and maintaining the at least one signal in the initial condition for a length of time known to be sufficient for the circuit to reach the initialization state.;
b) further comprising detecting initialization of the circuit by measuring impedance across, or current through, power terminals of said circuit;
c) further comprising detecting initialization of the circuit by detecting a presence of a clock signal generated by the circuit;
d) wherein maintaining the at least one signal to said circuit in an initial condition includes applying zero volts to the inputs of the circuit;
e) wherein maintaining the at least one signal to said circuit in an initial condition includes applying a signal known to be nondestructive to the inputs of the circuit; and
f) wherein maintaining and releasing the at least one signal is performed by a second circuit, and in which latter case, optionally,
wherein the second circuit transmits the at least one signal to the circuit via a third circuit.

8. A system for managing signals, comprising:
a first circuit being adversely sensitive to signals presented during an uninitialized state; and
a second circuit coupled to the first circuit via at least one signal channel, the second circuit maintaining at least one signal to said circuit in an initial condition during an uninitialized state of the first circuit and releasing the initial condition of the at least one signal following initialization of the first circuit.

9. The system of Claim 8, and any of:
a) further comprising an interface connecting the first circuit to the at least one signal channel, wherein the first circuit may be removed, reseated or replaced;
b) further comprising a detector that detects an initialization state of the first circuit and reports the initialization state to the second circuit, in which case, optionally, either:
i) wherein the first circuit transmits a signal to the detector, the signal indicating the initialization state of the first circuit, or
ii) wherein the detector detects a presence in the first circuit in a manner other than by detecting the initialization state of the first circuit and wherein the second circuit maintains the at least one signal in the initial condition for a length of time know to the sufficient for the first circuit to reach the initialization state; and
c) further comprising a third circuit connected to the first and second circuits via the at least one signal channel, the third circuit controlling the maintaining and releasing of signals to the first circuit.

10. A system for managing communication signals, comprising:
a circuit;
means for detecting the power status of the circuit;
means for maintaining signals to said circuit in an initial condition during an uninitialized state of the circuit; and
means for releasing the initial condition of the signals following initialization of the circuit.
